# EUROPEAN PATENT APPLICATION

(11) **EP 3 466 566 A1**
(43) Date of publication of application: **10.04.2019**
(21) Application number: 17806066.1
(22) Date of filing: 10.02.2017
(51) Int. Cl.: B22F 3/105, B22F 3/16, B22F 3/24, B33Y 10/00

(54) **METHOD FOR PRODUCING THREE-DIMENSIONAL SHAPED ARTICLE**

(30) Priority: 30.05.2016 JP 2016107565
(71) Applicant: Panasonic Intellectual Property Management Co., Ltd., Osaka-shi, Osaka 540-6207 (JP)
(72) Inventor: NAKAMURA, Akifumi, Osaka-shi, Osaka 540-6207, (JP); ABE, Satoshi, Osaka-shi, Osaka 540-6207, (JP)
(74) Representative: Müller-Boré & Partner Patentanwälte PartG mbB
(86) International application number: PCT/JP2017/004990
(87) International publication number: WO 2017/208504

(57) **Abstract**

In order to provide a method for manufacturing a three-dimensional shaped object which is capable of obtaining a higher accurate three-dimensional shaped object even if a solidified layer is subjected to a machine process in a process of a manufacture of the three-dimensional shaped object, there is provided a method for manufacturing a three-dimensional shaped object by alternate repetition of a powder-layer forming and a solidified-layer forming, the repetition comprising: (i) forming a solidified layer by irradiating a predetermined portion of a powder layer with a light beam, thereby allowing a sintering of the powder in the predetermined portion or a melting and subsequent solidification of the powder; and (ii) forming another solidified layer by newly forming a powder layer on the formed solidified layer, followed by an irradiation of a predetermined portion of the newly formed powder layer with the light beam, wherein a removal of a mobile foreign material is performed prior to at least one time-formation of the solidified layer, the mobile foreign material existing in an upper surface region of a latest formed solidified layer.

## Description

### TECHNICAL FIELD

The disclosure relates to a method for manufacturing a three-dimensional shaped object. More particularly, the disclosure relates to a method for manufacturing a three-dimensional shaped object in which a formation of a solidified layer is performed by an irradiation of a powder layer with a light beam.

### BACKGROUND OF THE INVENTION

Heretofore, a method for manufacturing a three-dimensional shaped object by irradiating a powder material with a light beam has been known (such method can be generally referred to as "selective laser sintering method"). The method can produce the three-dimensional shaped object by an alternate repetition of a powder-layer forming and a solidified-layer forming on the basis of the following (i) and (ii) :
(i) forming a solidified layer by irradiating a predetermined portion of a powder layer with a light beam, thereby allowing a sintering of the predetermined portion of the powder or a melting and subsequent solidification of the predetermined portion; and
(ii) forming another solidified layer by newly forming a powder layer on the formed solidified layer, followed by similarly irradiating the powder layer with the light beam.

This kind of technology makes it possible to produce the three-dimensional shaped object with its complicated contour shape in a short period of time. The three-dimensional shaped object can be used as a metal mold in a case where an inorganic powder material (e.g., a metal powder material) is used as the powder material. While on the other hand, the three-dimensional shaped object can also be used as various kinds of models in a case where an organic powder material (e.g., a resin powder material) is used as the powder material.

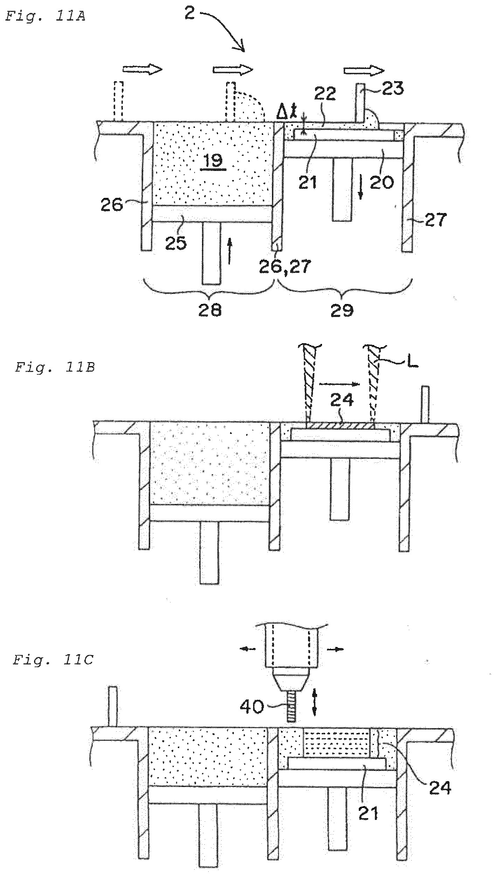

Taking a case as an example wherein the metal powder is used as the powder material, and the three-dimensional shaped object produced therefrom is used as the metal mold, the selective laser sintering method will now be briefly described. As shown in Figs. 11A-11C, a powder layer 22 with its predetermined thickness is firstly formed on a base plate 21 by a movement of a squeegee blade 23 (see Fig. 11A). Then, a predetermined portion of the powder layer is irradiated with a light beam L to form a solidified layer 24 (see Fig. 11B). Another powder layer is newly provided on the formed solidified layer, and is irradiated again with the light beam to form another solidified layer. In this way, the powder-layer forming and the solidified-layer forming are alternately repeated, and thereby allowing the solidified layers 24 to be stacked with each other (see Fig. 11C). The alternate repetition of the powder-layer forming and the solidified-layer forming leads to a production of a three-dimensional shaped object with a plurality of the solidified layers integrally stacked therein. The lowermost solidified layer 24 can be provided in a state of being adhered to the surface of the base plate 21. Therefore, there can be obtained an integration of the three-dimensional shaped object and the base plate. The integrated "three-dimensional shaped object" and "base plate" can be used as the metal mold.

The three-dimensional shaped object obtained by the selective laser sintering method has a relatively rough surface. For example, the three-dimensional shaped object has a surface with its roughness of about several hundred µm Rz. The surface roughness is caused by an adherence of the powder to the surface of the solidified layer of the three-dimensional shaped object. Upon a formation of the solidified layer, a conversion of energy of the light beam into heat causes the powder at a predetermined portion of the powder layer irradiated with the light beam to be sintered or be melted and subsequently solidified. Then, the temperature of the powder around the predetermined portion may also increases, and thus the powder around the predetermined portion may adhere to the surface of the solidified layer. The surface roughness of the three-dimensional shaped object is due to the adherence of the powder. Thus, the solidified layer may be subjected to a machine process after the manufacturing of the three-dimensional shaped object or in a process of the manufacturing thereof.

### PATENT DOCUMENTS (RELATED ART PATENT DOCUMENTS)

PATENT DOCUMENT 1: Japanese Unexamined Patent Application Publication No. H01-502890

### DISCLOSURE OF THE INVENTION

### PROBLEMS TO BE SOLVED BY THE INVENTION

With respect to above, the inventors of the present application have found that the following problems may arise when the solidified layer is subjected to the machine process in the process of the manufacturing of the three-dimensional shaped object. Specifically, when the solidified layer is subjected to the machine process in the process of the manufacturing of the three-dimensional shaped object, a swarf may occur, and then the swarf randomly may scatter around a portion subjected to the machine process. The random scattering may cause the swarf to scatter into a region where a solidified layer is to be formed later. In this case, both of the swarf and the powder may be irradiated with the light beam upon the formation of the solidified layer at a later time. The swarf generally may have a different shape and size from that of the powder since it occurs due to the machine process. Thus, there may be a difference between the melt and subsequent solidified state of the swarf and that of the powder upon an irradiation of the light beam, which may make a formation of a desired solidified layer impossible. Therefore, a high accurate three-dimensional shaped object may not be finally obtained.

Under these circumstances, the present invention has been created. That is, an object of the present invention is to provide a method for manufacturing a three-dimensional shaped object which is capable of obtaining a higher accurate three-dimensional shaped object even if the solidified layer is subjected to the machine process in the process of the manufacture of the three-dimensional shaped object.

### MEANS FOR SOLVING THE PROBLEMS

In order to achieve the above object, an embodiment of the present invention provides a method for manufacturing a three-dimensional shaped object by alternate repetition of a powder-layer forming and a solidified-layer forming, the repetition comprising:
(i) forming a solidified layer by irradiating a predetermined portion of a powder layer with a light beam, thereby allowing a sintering of the powder in the predetermined portion or a melting and subsequent solidification of the powder; and
(ii) forming another solidified layer by newly forming a powder layer on the formed solidified layer, followed by an irradiation of a predetermined portion of the newly formed powder layer with the light beam,
wherein a removal of a mobile foreign material is performed prior to at least one time-formation of the solidified layer, the mobile foreign material existing in an upper surface region of a latest formed solidified layer.

### EFFECT OF THE INVENTION

According to an embodiment of the present invention, it is possible to obtain a higher accurate three-dimensional shaped object even if the solidified layer is subjected to the machine process in the process of the manufacture of the three-dimensional shaped object.

### BRIEF DESCRIPTION OF THE DRAWINGS

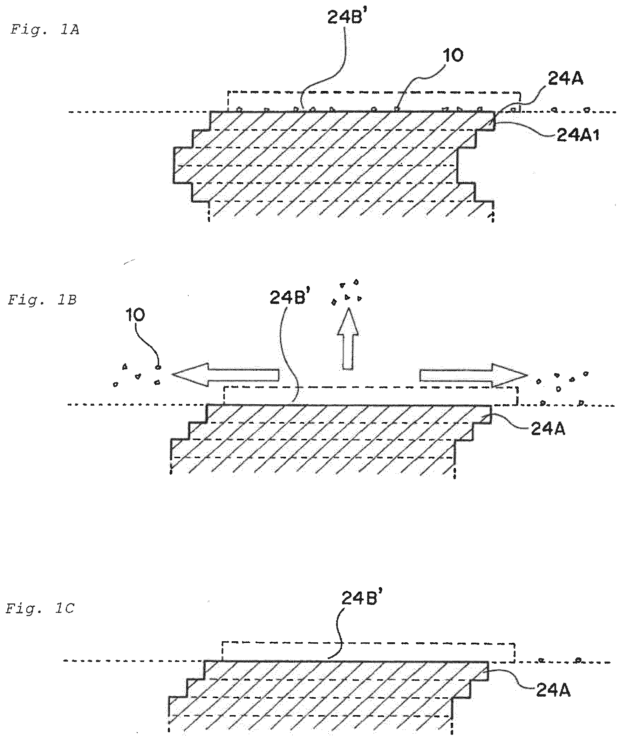

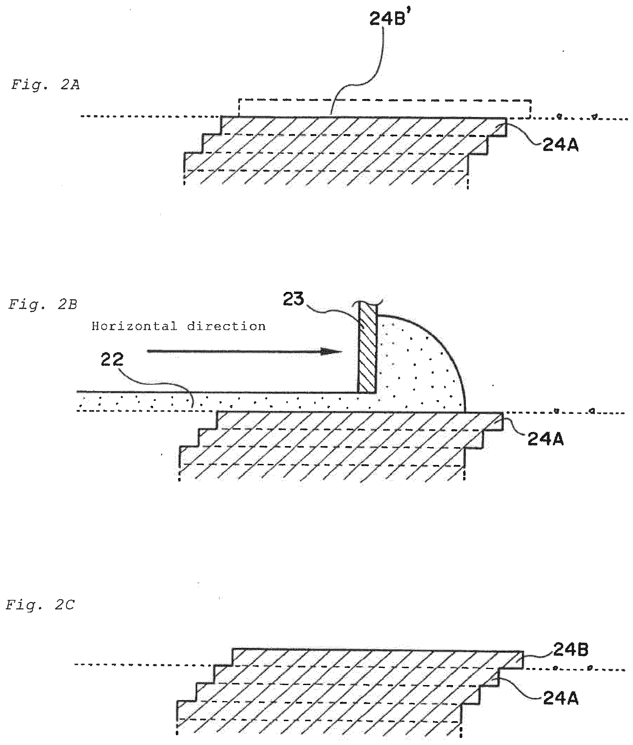

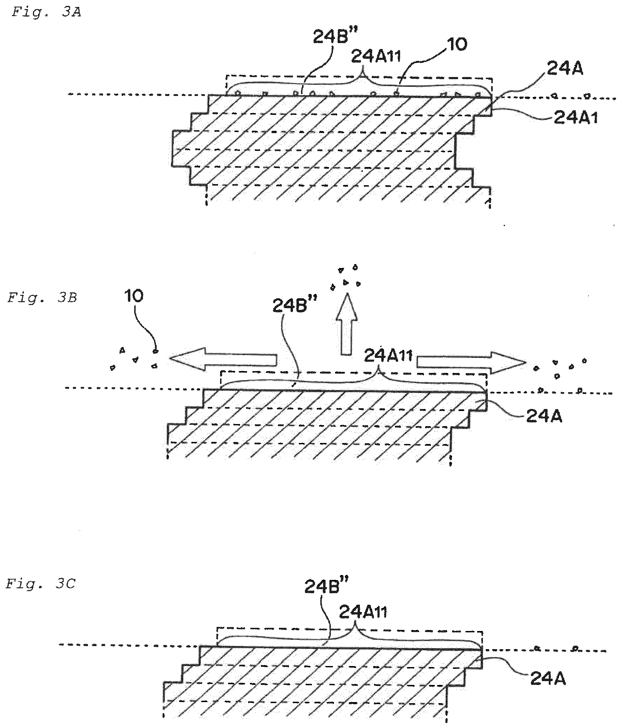

Each of Figs. 1A-1C is a cross-sectional view schematically illustrating an over time-embodiment that a removal of a mobile foreign material is performed, the mobile foreign material existing in a region where a solidified layer is to be newly formed.
Each of Figs. 2A-2C is a cross-sectional view schematically illustrating an over time-embodiment that a solidified layer is newly formed after a removal of a mobile foreign material.
Each of Figs. 3A-3C is a cross-sectional view schematically illustrating an over time-embodiment that a removal of a mobile foreign material is performed, the mobile foreign material existing in an upper surface region of the latest formed solidified layer.
Each of Figs. 4A-4C is a cross-sectional view schematically illustrating an over time-embodiment that a solidified layer is newly formed on an upper surface of the latest formed solidified layer after a removal of a mobile foreign material.
Fig. 5 is a cross-sectional view schematically illustrating a method for checking a presence or absence of a mobile foreign material.
Fig. 6 is a cross-sectional view schematically illustrating a method for checking a presence or absence of a mobile foreign material.
Fig. 7 is a cross-sectional view schematically illustrating a method for checking a presence or absence of a mobile foreign material.
Fig. 8 is a cross-sectional view schematically illustrating an embodiment that a removal of a mobile foreign material is performed by a use of a suction nozzle.
Fig. 9 is a cross-sectional view schematically illustrating an embodiment that a removal of a mobile foreign material is performed by a use of a brush.
Fig. 10 is a cross-sectional view schematically illustrating an embodiment that a removal of a mobile foreign material is performed by a use of a nozzle for blowing air.
Fig. 11A is a cross-sectional view schematically illustrating a laser-sintering/machining hybrid process in accordance with the selective laser sintering method upon a formation of a powder layer.
Fig. 11B is a cross-sectional view schematically illustrating a laser-sintering/machining hybrid process in accordance with the selective laser sintering method upon a formation of a solidified layer.
Fig. 11C is a cross-sectional view schematically illustrating a laser-sintering/machining hybrid process in accordance with the selective laser sintering method in a process of a stacking of a powder layer.
Fig. 12 is a perspective view schematically illustrating a construction of a laser-sintering/machining hybrid machine.
Fig. 13 is a flow chart of general operations of a laser-sintering/machining hybrid machine.

### MODES FOR CARRYING OUT THE INVENTION

The manufacturing method according to an embodiment of the present invention will be described in more detail with reference to.the accompanying drawings. It should be noted that forms/forms and dimensional proportions in the drawings are merely for illustrative purposes, and thus not the same as those of the actual parts or elements.

The term "powder layer" as used in this description and claims means a "metal powder layer made of a metal powder" or "resin powder layer made of a resin powder", for example. The term "predetermined portion of a powder layer" as used herein substantially means a portion of a three-dimensional shaped object to be manufactured. As such, a powder present in such predetermined portion is irradiated with a light beam, and thereby the powder undergoes a sintering or a melting and subsequent solidification to form a shape of a three-dimensional shaped object. Furthermore, the term "solidified layer" substantially means a "sintered layer" in a case where the powder layer is a metal powder layer, whereas term "solidified layer" substantially means a "cured layer" in a case where the powder layer is a resin powder layer.

The term "upward/downward" direction directly or indirectly described herein corresponds to a direction based on a positional relationship between the base plate and the three-dimensional shaped object. A side for manufacturing the three-dimensional shaped object is defined as the "upward direction", and a side opposed thereto is defined as the "downward direction" when using a position at which the base plate is provided as a standard.

### [Selective Laser Sintering Method]

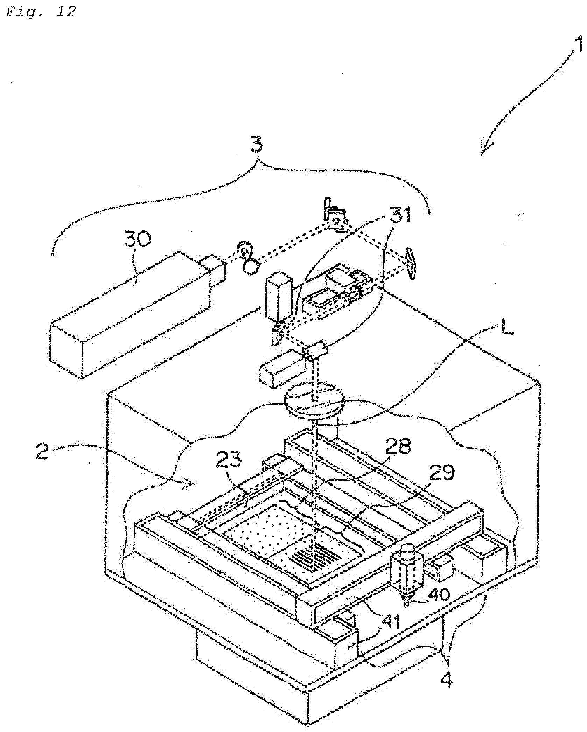

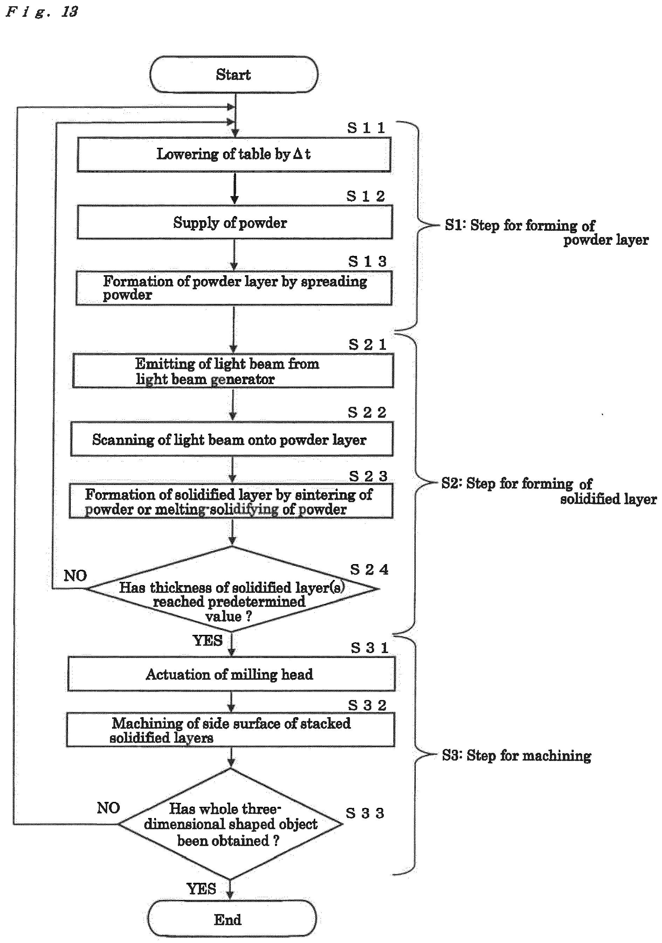

First of all, a selective laser sintering method, on which an embodiment of the manufacturing method of the present invention is based, will be described. By way of example, a laser-sintering/machining hybrid process wherein a machining is additionally carried out in the selective laser sintering method will be explained. Figs. 11A-11C schematically show a process embodiment of the laser-sintering/machining hybrid. Figs. 12 and 13 respectively show major constructions and operation flow regarding a metal laser sintering hybrid milling machine for enabling an execution of a machining process as well as the selective laser sintering method.

As shown in Figs. 11A-11C and 12, the laser-sintering/milling hybrid machine 1 is provided with a powder layer former 2, a light-beam irradiator 3, and a machining means 4.

The powder layer former 2 is a means for forming a powder layer with its predetermined thickness through a supply of powder (e.g., a metal powder or a resin powder) as shown in Figs 11A-11C. The light-beam irradiator 3 is a means for irradiating a predetermined portion of the powder layer with a light beam "L". The machining means 4 is a means for milling the side surface of the stacked solidified layers, i.e., the surface of the three-dimensional shaped object.

As shown in Figs. 11A-11C, the powder layer former 2 is mainly composed of a powder table 25, a squeegee blade 23, a forming table 20 and a base plate 21. The powder table 25 is a table capable of vertically elevating/descending in a "storage tank for powder material" 28 whose outer periphery is surrounded with a wall 26. The squeegee blade 23 is a blade capable of horizontally moving to spread a powder 19 from the powder table 25 onto the forming table 20, and thereby forming a powder layer 22. The forming table 20 is a table capable of vertically elevating/descending in a forming tank 29 whose outer periphery is surrounded with a wall 27. The base plate 21 is a plate for a shaped object. The base plate is disposed on the forming table 20 and serves as a platform of the three-dimensional shaped object.

As shown in Fig. 12, the light-beam irradiator 3 is mainly composed of a light beam generator 30 and a galvanometer mirror 31. The light beam generator 30 is a device for emitting a light beam "L". The galvanometer mirror 31 is a means for scanning an emitted light beam "L" onto the powder layer, i.e., a scan means of the light beam "L".

As shown in Fig. 12, the machining means 4 is mainly composed of a milling head 40 and an actuator 41. The milling head 40 is a cutting tool for milling the side surface of the stacked solidified layers, i.e., the surface of the three-dimensional shaped object. The actuator 41 is a means for driving the milling head 40 to move toward the position to be milled.

Operations of the laser sintering hybrid milling machine 1 will now be described in detail. As can been seen from the flowchart of Fig. 13, the operations of the laser sintering hybrid milling machine are mainly composed of a powder layer forming step (S1), a solidified layer forming step (S2), and a machining step (S3) . The powder layer forming step (S1) is a step for forming the powder layer 22. In the powder layer forming step (S1), first, the forming table 20 is descended by Δt (S11), and thereby creating a level difference Δt between an upper surface of the base plate 21 and an upper-edge plane of the forming tank 29. Subsequently, the powder table 25 is elevated by Δt, and then the squeegee blade 23 is driven to move from the storage tank 28 to the forming tank 29 in the horizontal direction, as shown in Fig. 11A. This enables a powder 19 placed on the powder table 25 to be spread onto the base plate 21 (S12), while forming the powder layer 22 (S13) . Examples of the powder for the powder layer include a "metal powder having a mean particle diameter of about 5 µm to 100 µm" and a "resin powder having a mean particle diameter of about 30 µm to 100 µm (e.g., a powder of nylon, polypropylene, ABS or the like". Following this step, the solidified layer forming step (S2) is performed. The solidified layer forming step (S2) is a step for forming a solidified layer 24 through the light beam irradiation. In the solidified layer forming step (S2), a light beam "L" is emitted from the light beam generator 30 (S21). The emitted light beam "L" is scanned onto a predetermined portion of the powder layer 22 by means of the galvanometer mirror 31 (S22) . The scanned light beam can cause the powder in the predetermined portion of the powder layer to be sintered or be melted and subsequently solidified, resulting in a formation of the solidified layer 24 (S23), as shown in Fig. 11B. Examples of the light beam "L" include carbon dioxide gas laser, Nd:YAG laser, fiber laser, ultraviolet light, and the like.

The powder layer forming step (S1) and the solidified layer forming step (S2) are alternately repeated. This allows a plurality of the solidified layers 24 to be integrally stacked with each other, as shown in Fig. 11C.

When the thickness of the stacked solidified layers 24 reaches a predetermined value (S24), the machining step (S3) is initiated. The machining step (S3) is a step for milling the side surface of the stacked solidified layers 24, i.e., the surface of the three-dimensional shaped object. The milling head 40 (see Fig. 11C and Fig. 12) is actuated to initiate an execution of the machining step (S31) . For example, in a case where the milling head 40 has an effective milling length of 3 mm, a machining can be performed with a milling depth of 3 mm. Therefore, supposing that "Δt" is 0.05 mm, the milling head 40 is actuated when the formation of the sixty solidified layers 24 is completed. Specifically, the side face of the stacked solidified layers 24 is subjected to the surface machining (S32) through a movement of the milling head 40 driven by the actuator 41. Subsequent to the surface machining step (S3), it is judged whether or not the whole three-dimensional shaped object has been obtained (S33). When the desired three-dimensional shaped object has not yet been obtained, the step returns to the powder layer forming step (S1). Thereafter, the steps S1 through S3 are repeatedly performed again wherein the further stacking of the solidified layers 24 and the further machining process therefor are similarly performed, which eventually leads to a provision of the desired three-dimensional shaped object.

### [Manufacturing Method of the Present Invention]

A manufacturing method according to an embodiment of the present invention is characterized by features associated with a formation of the solidified layer in the selective laser sintering method as described above.

Specifically, in the manufacturing method of the present invention, a removal of a mobile foreign material is performed before the solidified layer is newly formed, the mobile foreign material such as a swarf which may occur when the solidified layer is subjected to a machine process. In particular, in the present invention, when the mobile foreign material exists in the "region where the solidified layer is to be formed", a new solidified layer is formed after a removal of the mobile foreign material in the region. In other words, in the present invention, the removal of the mobile foreign material at least existing in the region where the new solidified layer is to be formed is performed prior to the formation of the new solidified layer.

The phrase "mobile foreign material" used herein means a foreign material which is movable on the solidified layer and / or the powder layer in a broad sense. The phrase "mobile foreign material" used herein means a foreign material which is caused by a random scattering onto the solidified layer and/or the powder layer and which has a non-adhesion to the solidified layer and/or powder layer in a narrow sense. Furthermore, the term "foreign material" means a different substance from "powder" which contributes to the formation of a desired solidified layer.

The mobile foreign material is not particularly limited to the swarf which may arise when the solidified layer is subjected to the machine process. For example, the mobile foreign material may be a substance obtained by a cooling and subsequent solidification in air of a melt component which may scatter when a predetermined portion of the powder layer is irradiated with the light beam. Namely, the mobile foreign material includes the swarf which may arise when the solidified layer is subjected to the machine process, the solidified layer being obtained by irradiating the "powder" at the predetermined portion of the powder layer with the light beam, and/or the substance obtained by the cooling and subsequent solidification in air of the melt component which may scatter when the "powder" at the predetermined portion of the powder layer is irradiated with the light beam. As can be understood from the above, the mobile foreign material in an embodiment of the present invention may be a foreign material derived from the "powder" of the powder layer.

Specific embodiments will be described with reference to Figs. 1A-1C and Figs. 2A-2C. A surface 24A₁, for example, a side surface and/or an upper surface, etc., of the solidified layer 24A in a process of a manufacture of the three-dimensional shaped object is subjected to a machine process using a machining means. The machining means may comprise an end mill as described above. While not particularly limited, the end mill may include a two-blade ball end mill of a super hard material, a square end mill, a radius end mill and the like for example. The machine process for the surface 24A₁ of the solidified layer 24A in the process of the manufacturing of the three-dimensional shaped object may cause a random scattering of the mobile foreign material 10 to surroundings. The mobile foreign material 10 may also scatter in a region 24B' where a new solidified layer is to be formed later as shown in Fig 1A due to the random scattering of the mobile foreign material 10. In the present invention, a removal of the mobile foreign material 10 which has scattered is performed. For example, the mobile foreign material 10 existing in the region 24B' is excluded out of the region 24B' to remove the mobile foreign material 10 existing in the region 24B' (see Figs. 1B and 1C).

After the removal of the mobile foreign material 10 from the region 24B'where the solidified layer is to be formed (see Fig. 2A), the squeegee blade 23 is moved in a horizontal direction to form a new powder layer 22 as shown in Fig. 2B. In other words, prior to the formation of the new powder layer 22, the removal of the mobile foreign material 10 is performed from the region 24B'where the solidified layer is to be formed. After the formation of the new powder layer 22, a new solidified layer 24 B is formed by irradiating a predetermined portion of the new powder layer 22 with the light beam (see Fig. 2C). A range of "the predetermined portion of the new powder layer 22" as used herein substantially corresponds to the surface area 24B' where the new solidified layer 24B is to be formed in a top plan view.

In the present invention, the new solidified layer 24B is finally formed after the removal of the mobile foreign material 10 existing in the region 24B' where the new solidified layer is to be formed as described above. In other words, prior to the formation of the new solidified layer 24B, the removal of the mobile foreign material 10 existing in the region 24B' where the new solidified layer is to be formed is performed. The removal of the mobile foreign material 10 from the region 24B' may allow the mobile foreign material 10 to be reduced at a point in time when the new solidified layer 24B is formed. Preferably, the removal of the mobile foreign material 10 from the region 24B' may allow a non-existence of the mobile foreign material 10 in the region 24B' where the new solidified layer is to be formed. The non-existence of the mobile foreign material 10 may make it possible to irradiate substantially only the powder with the light beam upon the formation of the solidified layer 24 B, which may cause only the powder to be in a melt state and subsequent solidified state. As a result, a desired solidified layer 24B is formed due to the melt and subsequent solidification of only the powder, which makes it possible to finally obtain a higher accurate three-dimensional shaped object.

For example, the region where the solidified layer is to be formed may be an upper surface region of the latest formed solidified layer. That is, prior to the formation of the solidified layer, the mobile foreign substance existing in the upper surface region of the latest formed solidified layer is removed.

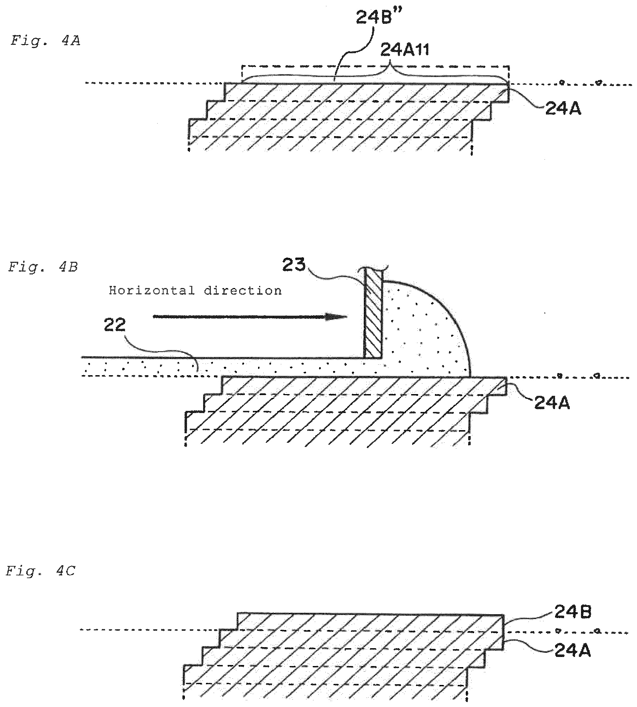

Specific embodiments will be described with reference to Figs. 3A-3C and Figs. 4A-4C. The surface 24A₁ of the solidified layer 24A in the process of the manufacture of the three-dimensional shaped object is subjected to the machine process using the machining means. The machine process for the surface 24A₁ of the solidified layer 24A in the process of the manufacturing of the three-dimensional shaped object may cause the random scattering of the mobile foreign material 10 to the surroundings. Due to the random scattering of the mobile foreign material 10, the mobile foreign material 10 may scatter on the upper surface region 24 A₁₁ of the latest formed solidified. layer 24A for example as shown in Fig. 3A. In an embodiment, only the mobile foreign material 10 scattering on the upper surface region 24A₁₁ of the latest formed solidified layer 24A is removed. For example, only the mobile foreign material 10 existing in the upper surface region 24A₁₁ of the latest formed solidified layer 24A is excluded out of the region 24B" where the new solidified layer is to be formed such that the mobile foreign material 10 is removed from the region 24B" where the new solidified layer is to be formed (See Figs. 3B and 3C). A range of "the region 24B''where the solidified layer is to be formed" as used herein corresponds to an upper region on the latest formed solidified layer.

After the removal of the mobile foreign material 10 from the region 24B" where the solidified layer is to be formed (see Fig. 4A), the squeeze blade 23 is moved in the horizontal direction to form a new powder layer 22 as shown in Fig. 4B. After the formation of the new powder layer 22, a new solidified layer 24B is formed by irradiating a predetermined portion of the new powder layer 22 with the light beam (see Fig. 4C). A range of "the predetermined portion of the new powder layer 22" substantially corresponds to the surface region 24 B" where the new solidified layer is to be formed in the top plan view. That is, a range of "the predetermined portion of the new powder layer 22" as used herein corresponds to an upper region on the latest formed solidified layer 24 A in the top plan view.

In an embodiment, the new solidified layer 24B is finally formed after only the mobile foreign material 10 existing in the upper surface region 24A₁₁ of the latest formed solidified layer 24A is removed from the region 24B" where the solidified layer is to be formed, as described above.
In other words, prior to the formation of the new solidified layer 24B, only the mobile foreign material 10 existing in the upper surface region 24A₁₁ of the latest formed solidified layer 24A is removed. The removal of the mobile foreign material 10 existing in the upper surface region 24A₁₁ of the latest formed solidified layer 24A may allow the mobile foreign material 10 to be reduced upon the formation of the new solidified layer 24B. Preferably, it may allow a non-existence of the mobile foreign material 10 in the region 24B'' where the new solidified layer is to be formed. The non-existence of the mobile foreign material 10 may make it possible to irradiate only the powder on the latest formed solidified layer 24 A with the light beam upon the formation of the solidified layer 24B, which may cause only the powder to be in a melt state and subsequent solidified state. As a result, due to the melt and subsequent solidification of only the powder on the latest formed solidified layer 24A, an interlayer connection between the latest formed solidified layer 24A and the solidified layer 24B to be newly formed may be improved. Therefore, it is possible to finally obtain a higher accurate three-dimensional shaped object.

<Method for Identifying Mobile Foreign Material> The following various embodiments may be adopted to check a presence or absence of the mobile foreign material 10 in the region 24B' where the new solidified layer is to be formed.

### First Method for identifying Mobile Foreign Material

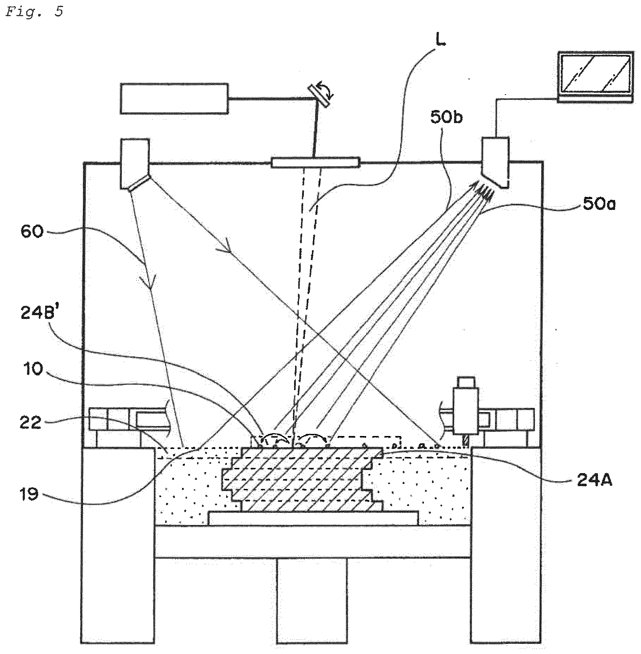

A reflection light may be used in the method for identifying the mobile foreign material. For example, as shown in Fig. 5, the presence or absence of the mobile foreign material 10 may be checked based on reflection lights 50a, 50b to be obtained from the region 24B' where the new solidified layer is to be formed.

As shown in Fig. 5, an incident light 60 is applied from a predetermined direction to the region 24 B' where the new solidified layer is to be formed and an already formed powder layer 22, and then the presence or absence of the mobile foreign material 10 may be checked based on a difference in a reflection intensity between a reflection light 50a and a reflection light 50b, the reflection light 50a being formed by a reflection of the incident light 60 at the region 24B' where the new solidified layer is to be formed, the reflection light 50b being formed by a reflection of the incident light 60 at the already formed powder layer 22. Upon the check, the reflection intensity of the reflection light 50b formed by the reflection of the incident light 60 at the already formed powder layer 22 may be checked in advance to clarify a comparison criterion. While being not particularly limited, an infrared light for example may be used as the incident light 60.

As described above, the mobile foreign material 10 may include the swarf which may arise when the solidified layer 24A is subjected to the machine process, and the solidified substance due to the cooling and subsequent solidification in air of the melt component which may scatter when the predetermined portion of the powder layer 22 is irradiated with the light beam L. Due to the machine process of the solidified layer and/or the cooling and subsequent solidification in air of the scattering melt component, the mobile foreign material 10 may have different shape and size from that of the powder 19 of the powder layer 22. The difference between the shape and size of the mobile foreign material 10 and those of the powder 19 of the powder layer 22 may cause a difference between a reflection intensity of a reflection light from the mobile foreign material and that of the reflection light from the powder. In an embodiment, if there is a difference in the reflection intensity of each reflection light, it may be determined that the mobile foreign material exists, and if the reflection intensity of each reflection light is the same as each other, it may be determined that the mobile foreign material does not exist. Namely, in an embodiment, it is possible to check the presence or absence of the mobile foreign material 10 and a presence position thereof due to the difference in the reflection intensity of each reflection light.

### Second Method for identifying Mobile Foreign Material

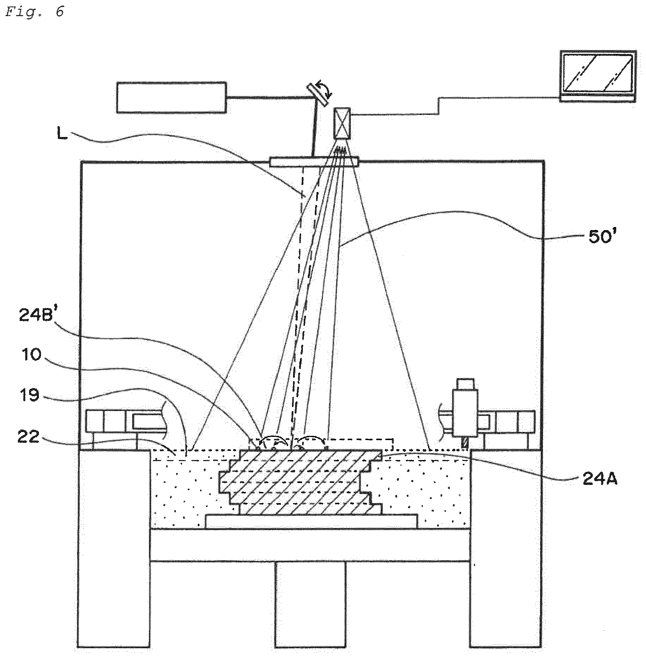

An optical spectrum may be used in the method for identifying the mobile foreign material. For example, as shown in Fig. 6, the region 24B' where the new solidified layer is to be formed is irradiated with the light beam L to be used for forming the solidified layer. Then, a spectrum of a reflection light 50' by a reflection of the light beam L at the region 24B' where the new solidified layer is to be formed is compared with a spectrum (previously acquired) of a reflection light when the already formed powder layer is irradiated with the light beam to be used for forming the solidified layer, the latter spectrum being obtained in advance. As a result of the comparison, if each spectrum value is different from each other, it may be determined that the mobile foreign material 10 exists and a presence position may be specified.

As described above, the mobile foreign material 10 may include the swarf which may arise when the solidified layer 24A is subjected to the machine process, and the solidified substance due to the cooling and subsequent solidification in air of the melt component which may scatter when the predetermined portion of the powder layer 22 is irradiated with the light beam L. Due to the machine process of the "solidified layer" and/or the cooling and subsequent solidification of the scattering component of the "powder layer", it is considered that the mobile foreign material 10 may have a relative high solidification density. Thus, at a point in time of the light beam-irradiation, a state of the powder 19 of the powder layer 22 and that of the mobile foreign material 10 are different from each other. Therefore, a property of the powder 19 of the powder layer 22 and that of the mobile foreign material 10 are not the same as each other. As a result, a difference of the property may cause a difference in the optical spectrum.

### Third Method for identifying Mobile Foreign Material

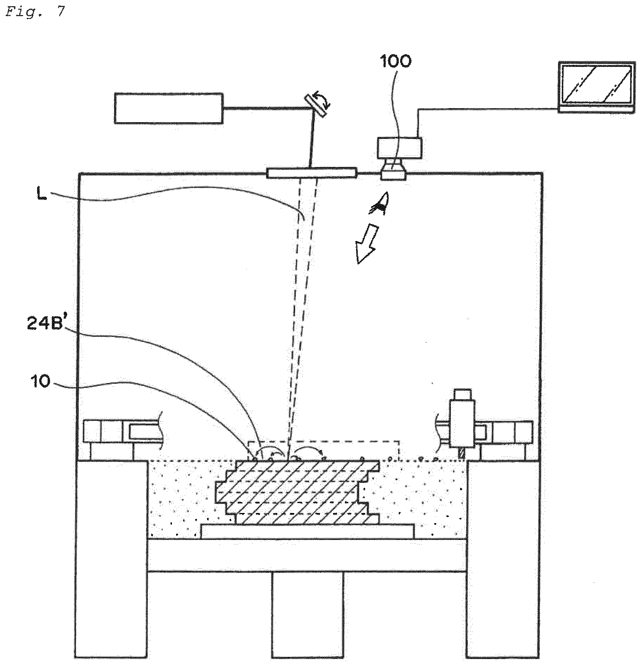

A photographing means may be used in the method for identifying the mobile foreign material. For example, as shown in Fig. 7, A photographing device for an image 100 may be used. More specifically, the image of the region 24B' where the new solidified layer is to be formed is obtained by the photographing device for the image 100, and subsequently a presence or absence of the mobile foreign material 10 in the region 24B' and a location where it exists may be directly checked based on the obtained image.

### <Method for Removing Mobile Foreign Material>

The following various embodiments may be adopted to remove the mobile foreign material 10 in the region 24B' where the new solidified layer is to be formed.

### 1. Use of Suction Nozzle

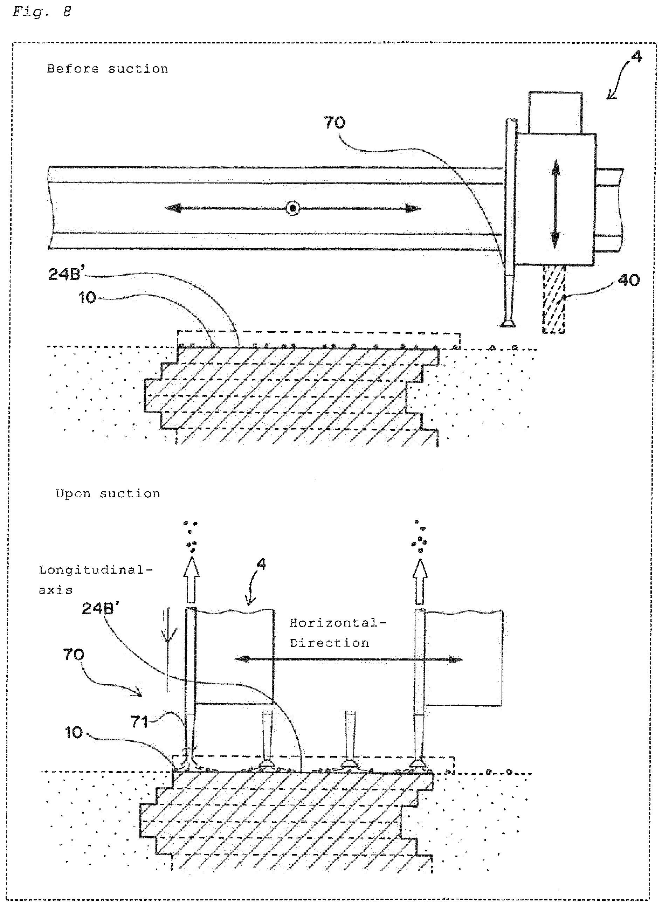

A suction nozzle may be used for a removal of the mobile foreign material. For example, as shown in Fig. 8, the suction nozzle 70 may be moved in a horizontal direction to suck the mobile foreign material 10. The phrase "suction nozzle 70" as used herein may be a device capable of sucking the mobile foreign material 10. A part which serves to suck the mobile foreign material 10 may have a tubular configuration, particularly a thin tube configuration due to the "nozzle". In view of this, the suction nozzle 70 of an embodiment of the present invention can be referred to as a "tubular suction device". For example, the suction nozzle 70 may include a thin tubular portion 71 and a suction instrument (not shown) connected with the thin tubular portion. A use of the suction nozzle 70 makes it possible to locally suck the mobile foreign material 10 to be removed. Therefore, it is possible to suitably remove the mobile foreign material 10 existing in the region 24B' where the new solidified layer and to further avoid a scattering of the mobile foreign material 10 around the region 24B'. A non-existence of the mobile foreign material 10 in the region 24B' may make it possible to irradiate substantially only the powder with the light beam upon the formation of the new solidified layer, which may cause only the powder to be in a melt state and subsequent solidified state. As a result, a desired solidified layer is formed due to the melt and subsequent solidification of only the powder, which makes it possible to finally obtain a higher accurate three-dimensional shaped object.

In an embodiment, the suction nozzle 70 may be installed on the machining means 4 in view of an effective utilization of an working space region. Specifically, the machining means 4 and the suction nozzle 70 may be arranged adjacent to each other so that a longitudinal axis of the machining means 4 and a longitudinal axis of the suction nozzle 70 are substantially parallel to each other. Upon a use of the machining means 4, the suction nozzle 70 may be located above an end of the end mill 40 of the machining means 4 not to disturb a movement of the machining means 4. On the other hand, upon a use of the suction nozzle 70, the end mill of the machining means 4 may be located above the end of the suction nozzle 70 not to disturb a movement of the suction nozzle 70.

In an embodiment, the presence or absence of the mobile foreign material 10 and the presence position of the mobile foreign material 10 are checked in advance in accordance with the above method for identifying the mobile foreign material, and subsequently a movement path in a horizontal direction of the suction nozzle 70 installed on the machining means 4 may be determined in advance. As a result, a movement of the suction nozzle 70 during the suction can be controlled such that the suction nozzle 70 is moved along a suitable path without the movement the suction nozzle 70 along an unnecessary path.

In an embodiment, a suction may be performed on a condition that a suction port of the suction nozzle 70 is brought close to a surface of the mobile foreign material 10. Namely, upon the suction, it is preferable to make a distance between the suction port of the suction nozzle and the mobile foreign material 10 small. The distance is less than 5 mm for example, preferably less than 3 mm, more preferably less than 1 mm, and still more preferably less than 0.5 mm. A small distance makes it possible to suitably provide a suction force of the suction nozzle 70 with the mobile foreign material 10. Therefore, the suitable suction force makes it possible to more suitably remove the mobile foreign material 10 in the region 24B' where the new solidified layer is to be formed and to further avoid a scattering of the mobile foreign material 10 around the region 24B'. More specifically, the smaller distance between the suction port of the suction nozzle 70 and the mobile foreign material 10 makes it possible to perform a more suitable local suction of the mobile foreign material 10 to be removed. Therefore, it is possible to more preferably prevent a scattering of the mobile foreign material 10 to a powder-supply means side, for example, in the storage tank for powder material 28 (see Fig. 11A) and/or on the already formed powder layer between the storage tank for the powder material 28 and the region 24B' where the new solidified layer is to be formed. Therefore, upon a formation of a new powder layer later, an intrusion of the mobile foreign material 10 in the new powder layer can be more preferably avoided. Thus, it is possible to more preferably avoid a re-location of the mobile foreign material 10 in the region 24B' where the new solidified layer is to be formed.

In an embodiment, the suction condition of the suction nozzle 70 may be controlled such that it can be changed in a condition of an existence of the mobile foreign material 10 having a relatively large size in the region 24B', in a comparison with that of the mobile foreign material 10 having a relatively small size. Specifically, a suction amount of the suction nozzle 70 for sucking the mobile foreign material 10 having the relatively large size may be controlled to be larger than that for sucking the mobile foreign material 10 having the relatively small size. In addition, a scanning speed of the suction nozzle 70 for sucking the mobile foreign material 10 having the relatively large size may be controlled to be smaller than that for sucking the mobile foreign material 10 having the relatively small size. As a result, it is possible to suitably control the suction condition of the suction nozzle 70 for sucking the mobile foreign material 10. Thus, a suitable removal of the mobile foreign material 10 by the suction thereof is possible in a state that an influence due to a difference in size is reduced.

### 2. Use of Brush

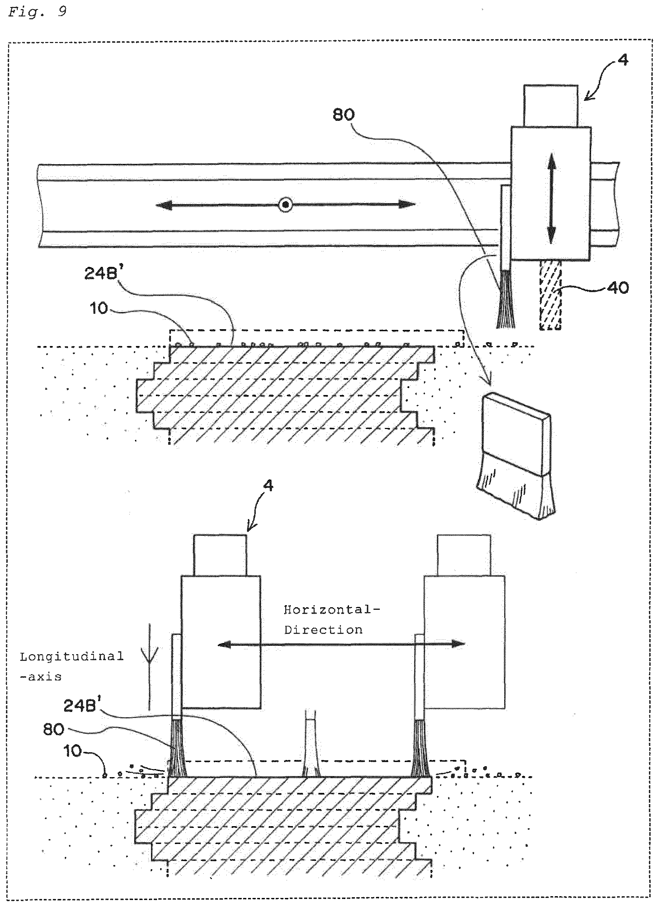

A brush may be used for a removal of the mobile foreign material. For example, the brush 80 may be moved in a horizontal direction to sweep the mobile foreign material 10 to an outside of the region 24B' as shown in Fig. 9. A use of the brush 80 makes it possible to sweep the mobile foreign material 10 to be removed to the outside of the region 24B', which leads to a suitable removal of the mobile foreign material 10 in the region 24B' where the new solidified layer is to be formed. Upon the sweep, it is preferable to control a sweep direction not to sweep the mobile foreign material 10 to the powder-supply means side. The control is performed to avoid the re-location of the mobile foreign material 10 in the region 24B' where the new solidified layer is to be formed due to the intrusion thereof in the new powder layer upon the formation of the new powder layer later, in a case that the mobile foreign material is swept to the powder-supply means side, for example, in the storage tank for powder material 28 (see Fig. 11A) and/or on the already formed powder layer between the storage tank for the powder material 28 and the region 24B' where the new solidified layer is to be formed. A non-existence of the mobile foreign material 10 in the region 24B' in an embodiment may make it possible to irradiate substantially only the powder with the light beam upon the formation of the new solidified layer, which may cause only the powder to be in a melt state and subsequent solidified state. As a result, a desired solidified layer is formed due to the melt and subsequent solidification of only the powder, which makes it possible to finally obtain a higher accurate three-dimensional shaped object.

In an embodiment, the brush 80 may be installed on the machining means 4 in view of an effective utilization of a working space region. Specifically, the machining means 4 and the brush 80 may be arranged adjacent to each other such that a longitudinal axis of the machining means 4 and a longitudinal axis of the brush 80 are substantially parallel to each other. Upon a use of the machining means 4, the brush 80 may be located above an end of the end mill 40 of the machining means 4 not to disturb a movement of the machining means 4. On the other hand, upon a use of the brush 80, the end mill of the machining means 4 may be located above the brush 80 not to disturb a movement of the brush 80.

In an embodiment, the presence or absence of the mobile foreign material 10 and the presence position of the mobile foreign material 10 are checked in advance in accordance with the above method for identifying the mobile foreign material, and subsequently a movement path in a horizontal direction of the brush 80 installed on the machining means 4 may be determined in advance. As a result, a movement of the brush 80 can be controlled such that the brush 80 is moved along a suitable path without the movement the brush 80 along an unnecessary path.

In an embodiment, a sweep condition of the brush 80 may be controlled such that it can be changed in a condition of an existence of the mobile foreign material 10 having a relatively large size in the region 24B' , in a comparison with that of the mobile foreign material 10 having a relatively small size. Specifically, a sweep speed of the brush 80 for the mobile foreign material 10 having the relatively large size may be controlled to be larger than that for the mobile foreign material 10 having the relatively small size. In addition, the number of times of the brush 80 for the mobile foreign material 10 having the relatively large size may be controlled to be larger than that for the mobile foreign material 10 having the relatively small size. As a result, it is possible to suitably control the sweep condition of the brush 80 for the mobile foreign material 10. Thus, a suitable sweep of the mobile foreign material 10 is possible in a state that an influence due to a difference in size is reduced.

### 3. Use of Air Blowing-Nozzle

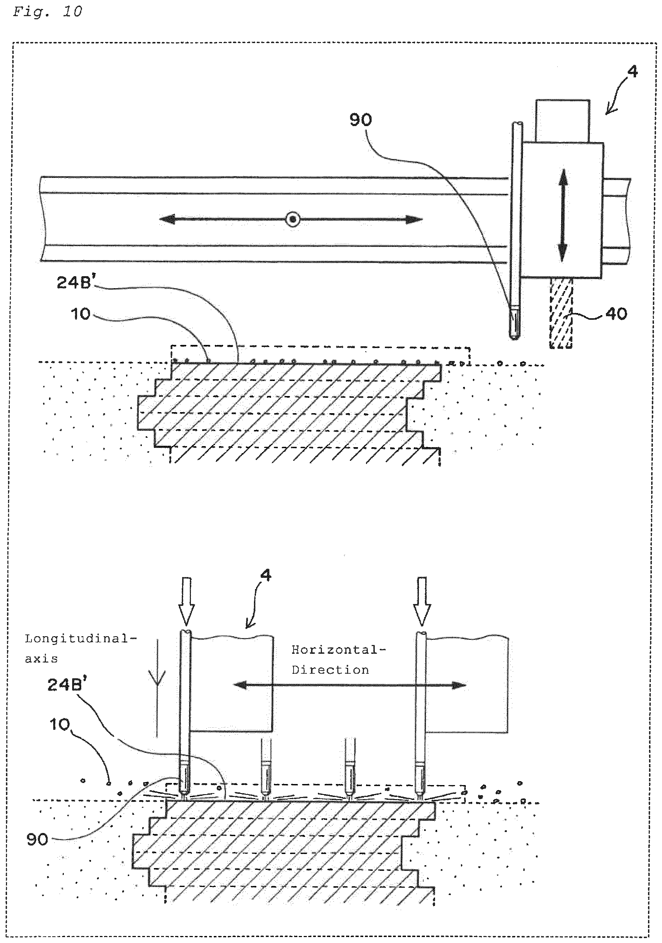

An air blowing-nozzle may be used for a removal of the mobile foreign material. For example, the air blowing-nozzle 90 may be moved in a horizontal direction to blow the mobile foreign material 10 to an outside of the region 24B' as shown in Fig. 10. A use of the air blowing-nozzle 90 makes it possible to blow the mobile foreign material 10 to be removed to the outside of the region 24B', which leads to a suitable removal of the mobile foreign material 10 in the region 24B' where the new solidified layer is to be formed. Upon the blowing, it is preferable to control a blowing direction not to blow the mobile foreign material 10 to the powder-supply means side. The control is performed to avoid the re-location of the mobile foreign material 10 in the region 24B' where the new solidified layer is to be formed due to the intrusion thereof in the new powder layer upon the formation of the new powder layer later, in a case that the mobile foreign material is blown to the powder-supply means side, for example, in the storage tank for powder material 28 (see Fig. 11A) and/or on the already formed powder layer between the storage tank for the powder material 28 and the region 24B' where the new solidified layer is to be formed. A non-existence of the mobile foreign material 10 in the region 24B' in an embodiment may make it possible to irradiate substantially only the powder with the light beam upon the formation of the new solidified layer, which may cause only the powder to be in a melt state and subsequent solidified state. As a result, a desired solidified layer is formed due to the melt and subsequent solidification of only the powder, which makes it possible to finally obtain a higher accurate three-dimensional shaped object.

In an embodiment, the air blowing-nozzle 90 may be installed on the machining means 4 in view of an effective utilization of a working space region. Specifically, the machining means 4 and the air blowing-nozzle 90 may be arranged adjacent to each other such that a longitudinal axis of the machining means 4 and a longitudinal axis of the air blowing-nozzle 90 are substantially parallel to each other. Upon a use of the machining means 4, the air blowing-nozzle 90 may be located above an end of the end mill 40 of the machining means 4 not to disturb a movement of the machining means 4. On the other hand, upon a use of the air blowing-nozzle 90, the end mill of the machining means 4 may be located above the air blowing-nozzle 90 not to disturb a movement of the air blowing-nozzle 90.

In an embodiment, the blowing may be performed on a condition that a blow port of the air blowing-nozzle 90 is brought close to a surface of the mobile foreign material 10. Namely, upon the blowing, it is preferable to make a distance between the blow port of the air blowing-nozzle 90 and the mobile foreign material 10 small. The distance is less than 5 mm for example, preferably less than 3 mm, more preferably less than 1 mm, and still more preferably less than 0.5 mm. A small distance makes it possible to suitably provide a blow force of the air blowing-nozzle 90 with the mobile foreign material 10. Therefore, the suitable blow force makes it possible to more suitably remove the mobile foreign material 10 in the region 24B' where the new solidified layer is to be formed.

In an embodiment, the presence or absence of the mobile foreign material 10 and the presence position of the mobile foreign material 10 are checked in advance in accordance with the above method for identifying the mobile foreign material, and subsequently a movement path in a horizontal direction of the air blowing-nozzle 90 installed on the machining means 4 may be determined in advance. As a result, a movement of the air blowing-nozzle 90 can be controlled such that the air blowing-nozzle 90 is moved along a suitable path without the movement the air blowing-nozzle 90 along an unnecessary path.

In an embodiment, a blow condition of the air blowing-nozzle 90 may be controlled such that it can be changed on a condition of an existence of the mobile foreign material 10 having a relatively large size in the region 24B', in a comparison with that of the mobile foreign material 10 having a relatively small size. Specifically, a blow amount of the air blowing-nozzle 90 for the mobile foreign material 10 having the relatively large size may be controlled to be larger than that for the mobile foreign material 10 having the relatively small size. In addition, a blow speed of the air blowing-nozzle 90 for the mobile foreign material 10 having the relatively large size may be controlled to be larger than that for the mobile foreign material 10 having the relatively small size. As a result, it is possible to suitably control the blow condition of the air blowing-nozzle 90 for the mobile foreign material 10. Thus, a suitable blow of the mobile foreign material 10 is possible in a state that an influence due to a difference in size is reduced.

Although some embodiments of the present invention have been hereinbefore described, these are merely typical examples in the scope of the present invention. Accordingly, the present invention is not limited to the above embodiments. It will be readily appreciated by the skilled person that various modifications are possible without departing from the scope of the present invention.

It should be noted that the present invention as described above includes the following aspects.
The first aspect: A method for manufacturing a three-dimensional shaped object by alternate repetition of a powder-layer forming and a solidified-layer forming, the repetition comprising:
   (i) forming a solidified layer by irradiating a predetermined portion of a powder layer with a light beam, thereby allowing a sintering of the powder in the predetermined portion or a melting and subsequent solidification of the powder; and
   (ii) forming another solidified layer by newly forming a powder layer on the formed solidified layer, followed by an irradiation of a predetermined portion of the newly formed powder layer with the light beam,
   wherein a removal of a mobile foreign material is performed prior to at least one time-formation of the solidified layer, the mobile foreign material existing in an upper surface region of a latest formed solidified layer.
The second aspect: The method according to the first aspect, wherein a region where the solidified layer is to be formed is an upper surface region of the latest formed solidified layer.
The third aspect: The method according to the first aspect or the second aspect, further comprising subjecting the solidified layer to a machine process, wherein the mobile foreign material is a swarf occurring upon the machine process for the solidified layer.
The fourth aspect: The method according to any one of the first to third aspects, wherein a presence or absence of the mobile foreign material is checked based on a reflection light to be obtained from the region where the solidified layer is to be formed.
The fifth aspect: The method according to any one of the first to fourth aspects, wherein a suction of the mobile foreign material is performed by a use of a suction nozzle to remove the mobile foreign material from the region where the solidified layer is to be formed.

### INDUSTRIAL APPLICABILITY

The method for manufacturing the three-dimensional shaped object according to an embodiment of the present invention can provide various kinds of articles. For example, in a case where the powder layer is a metal powder layer (i.e., an inorganic powder layer) and thus the solidified layer corresponds to a sintered layer, the three-dimensional shaped object obtained by an embodiment of the present invention can be used as a metal mold for a plastic injection molding, a press molding, a die casting, a casting or a forging. While on the other hand in a case where the powder layer is a resin powder layer (i.e., an organic powder layer) and thus the solidified layer corresponds to a cured layer, the three-dimensional shaped object obtained by an embodiment of the present invention can be used as a resin molded product.

### CROSS REFERENCE TO RELATED PATENT APPLICATION

The present application claims the right of priority of Japanese Patent Application No. 2016-107565 (filed on May 30, 2016, the title of the invention: "METHOD FOR MANUFACTURING THREE-DIMENSIONAL SHAPED OBJECT"), the disclosure of which is incorporated herein by reference.

### EXPLANATION OF REFERENCE NUMERALS

- 10: Mobile foreign material (e.g., Swarf)
- 19: Powder
- 24B': Region where solidified layer is to be formed
- 24B'': Region where solidified layer is to be formed
- 24B: Solidified layer
- 24A: Latest formed solidified layer
- 24A₁₁: Upper surface region of latest formed solidified layer
- 50a, 50b: Reflection light
- 50': Reflection light
- 70: Suction nozzle

## Claims

1. A method for manufacturing a three-dimensional shaped object by alternate repetition of a powder-layer forming and a solidified-layer forming, the repetition comprising:
(i) forming a solidified layer by irradiating a predetermined portion of a powder layer with a light beam, thereby allowing a sintering of the powder in the predetermined portion or a melting and subsequent solidification of the powder; and
(ii) forming another solidified layer by newly forming a powder layer on the formed solidified layer, followed by an irradiation of a predetermined portion of the newly formed powder layer with the light beam,
wherein a removal of a mobile foreign material is performed prior to at least one time-formation of the solidified layer, the mobile foreign material existing in an upper surface region of a latest formed solidified layer.

2. The method according to claim 1, wherein a region where the solidified layer is to be formed is an upper surface region of the latest formed solidified layer.

3. The method according to claim 1, further comprising subjecting the solidified layer to a machine process,
wherein the mobile foreign material is a swarf occurring upon the machine process for the solidified layer.

4. The method according to claim 1, wherein a presence or absence of the mobile foreign material is checked based on a reflection light to be obtained from the region where the solidified layer is to be formed.

5. The method according to claim 1, wherein a suction of the mobile foreign material is performed by a use of a suction nozzle to remove the mobile foreign material from the region where the solidified layer is to be formed.

## Amended claims

### Amended claims under Art. 19.1 PCT

1. (Amended) A method for manufacturing a three-dimensional shaped object by alternate repetition of a powder-layer forming and a solidified-layer forming, the repetition comprising:
(i) forming a solidified layer by irradiating a predetermined portion of a powder layer with a light beam, thereby allowing a sintering of the powder in the predetermined portion or a melting and subsequent solidification of the powder; and
(ii) forming another solidified layer by newly forming a powder layer on the formed solidified layer, followed by an irradiation of a predetermined portion of the newly formed powder layer with the light beam,
wherein a removal of a mobile foreign material is performed before the powder layer is newly formed on a latest formed solidified layer, the mobile foreign material existing in an upper surface region of the latest formed solidified layer.

2. (Amended) The method according to claim 1, wherein a region where the solidified layer is to be formed is the upper surface region of the latest formed solidified layer.

3. The method according to claim 1, further comprising subjecting the solidified layer to a machine process,
wherein the mobile foreign material is a swarf occurring upon the machine process for the solidified layer.

4. The method according to claim 1, wherein a presence or absence of the mobile foreign material is checked based on a reflection light to be obtained from the region where the solidified layer is to be formed.

5. The method according to claim 1, wherein a suction of the mobile foreign material is performed by a use of a suction nozzle to remove the mobile foreign material from the region where the solidified layer is to be formed.
